# EUROPEAN PATENT SPECIFICATION

(11) **EP 3 355 233 B1**
(45) Date of publication and mention of the grant of the patent: **06.05.2020**
(21) Application number: 16851659.9
(22) Date of filing: 28.09.2016
(51) Int. Cl.: G06G 7/60, G06N 3/063

(54) **SEMICONDUCTOR DEVICE**
HALBLEITERBAUELEMENT
DISPOSITIF À SEMI-CONDUCTEURS

(30) Priority: 28.09.2015 JP 2015190374
(43) Date of publication of application: 01.08.2018
(73) Proprietor: Pezy Computing K.K., Tokyo 101-0052 (JP)
(72) Inventor: SAITO, Motoaki, Tokyo 101-0052 (JP)
(74) Representative: Ström & Gulliksson AB
(86) International application number: PCT/JP2016/078672
(87) International publication number: WO 2017/057488

(56) References cited:
- JP-A- H05 242 276
- JP-A- H06 243 117
- JP-A- H10 253 748
- US-A- 5 371 835
- AKOPYAN FILIPP ET AL: "TrueNorth: Design and Tool Flow of a 65 mW 1 Million Neuron Programmable Neurosynaptic Chip", IEEE TRANSACTIONS ON COMPUTER AIDED DESIGN OF INTEGRATED CIRCUITS AND SYSTEMS, IEEE SERVICE CENTER, PISCATAWAY, NJ, US, vol. 34, no. 10, 1 October 2015 (2015-10-01), pages 1537-1557, XP011669563, ISSN: 0278-0070, DOI: 10.1109/TCAD.2015.2474396 [retrieved on 2015-09-17]
- MIURA NORIYUKI ET AL: "A Scalable 3D Heterogeneous Multicore with an Inductive ThruChip Interface", IEEE MICRO, IEEE SERVICE CENTER, LOS ALAMITOS, CA, US, vol. 33, no. 6, 1 November 2013 (2013-11-01), pages 6-15, XP011533795, ISSN: 0272-1732, DOI: 10.1109/MM.2013.112 [retrieved on 2013-12-13]
- BELHADJ BILEL ET AL: "The improbable but highly appropriate marriage of 3D stacking and neuromorphic accelerators", 2014 INTERNATIONAL CONFERENCE ON COMPILERS, ARCHITECTURE AND SYNTHESIS FOR EMBEDDED SYSTEMS (CASES), ACM, 12 October 2014 (2014-10-12), pages 1-9, XP032715680, DOI: 10.1145/2656106.2656130 [retrieved on 2014-12-02]

## Description

### TECHNICAL FIELD

The present invention relates to a semiconductor device.

### BACKGROUND ART

Conventionally, a semiconductor device is known which includes a plurality of semiconductor chips and in which non-contact communication is enabled between the semiconductor chips. In the semiconductor device, each semiconductor chip includes a transmission unit, a transmission coil, a reception coil, and a reception unit. A transmission signal of one semiconductor chip is transmitted to another semiconductor chip via the transmission unit and the transmission coil. The transmission signal that has been transmitted via the transmission unit and the transmission coil is received as a reception signal via a reception coil and a reception unit of the other semiconductor chip (Japanese Patent Application with publication No. 2010-15654 and Japanese Patent Application with publication No. H06-243117). Communication between one semiconductor chip and the other semiconductor chip is non-contact communication because the communication is performed by magnetic coupling (inductive coupling) of the transmission coil and the reception coil.

It is known that the semiconductor device in which non-contact communication is enabled between the semiconductor chips is used for a neuro-semiconductor device (Japanese Patent Application with publication No. H06-243117). The neuro-semiconductor device is a semiconductor device having a function imitating a function of human cerebral nerve cells and it is sometimes referred to as a neuro-synaptic processing unit. The neuro-semiconductor device includes a plurality of neuron sections and a plurality of synapse bonds. In addition, in the neuro-semiconductor device, the plurality of neuron sections are bonded via the plurality of synapse bonds. In the neuro-semiconductor device of Japanese Patent Application with publication No. H06-2431172, the two coils performing the non-contact communication form a part of the synapse bonds.

Another prior art solution is shown in the article *"*TrueNorth: Design and Tool Flow of a 65 mW 1 Million Neuron Programmable Neurosynaptic Chip", by Akopyan Filipp et al., published in IEEE TRANSACTIONS ON COMPUTER AIDED DESIGN OF INTEGRATED CIRCUITS AND SYSTEMS, IEEE SERVICE CENTER, PISCATAWAY, NJ, US, vol. 34, no. 10, 2015-10-01, pages 1537-1557, XP011669563, ISSN: 0278-0070, DOl: 10.1109/TCAD.2015.2474396.

A further prior art solution is shown in the article "A Scalable 3D Heterogeneous Multicore with an Inductive ThruChip Interface" by Miura Noriyuki et al., published in IEEE MICRO, IEEE SERVICE CENTER, LOS ALAMITOS, CA,US, vol. 33, no. 6,2013-11-01, pages 6-15, XP011533795, ISSN: 0272-1732, DOl: 10.1109/MM.2013.112.

Yet a further prior art solution is found in the US-patent application number US5371835A.

### DISCLOSURE OF THE INVENTION

### Problems to be Solved by the Invention

However, when the magnitude of "1H" is required for the neuro-semiconductor device imitating human intelligence, it is not possible to meet the requirement in conventional technologies including Japanese Patent Application with publication No. 2010-15654 and Japanese Patent Application with publication No. H06-243117. Here, "1H" means that one human brain has about 100 billion neuron sections and about 100 trillion synapse bonds.

An object of the present invention is to realize a "1H"-magnitude neuro-semiconductor device.

### Means for Solving the Problems

The invention is defined by the appended claims.

A neuro-semiconductor device according to an aspect of the present invention is a semiconductor device that constitutes a neural network in which a plurality of sets each including a plurality of synapse bonds and a neuron section are connected with each other. The semiconductor device comprises a semiconductor substrate portion, and an insulating layer portion stacked on the semiconductor substrate portion, the synapse bonds configured to perform non-contact communication using magnetic coupling, wherein the synapse bonds have a reception circuit unit formed at the semiconductor substrate portion and reception coils formed at the insulating layer portion, wherein the reception circuit unit and the reception coils are connected by wiring lines formed in the insulating layer portion; and the neuron sections that include a wired connection and a logical circuit, wherein the neuron sections have a transmission circuit unit formed at the semiconductor substrate portion and transmission coils formed at the insulating layer portion, wherein the transmission circuit unit and the transmission coils are connected by wiring lines formed in the insulating layer portion, wherein the semiconductor device has a connection array where the synapse bonds and the neuron sections are spread three-dimensionally, wherein some or all reception coils and some or all transmission coils are disposed to overlap the transmission circuit unit and the reception circuit unit in a vertical direction, and wherein grouping of the connection array is performed and the semiconductor device has a function of reconfiguring a configuration including the number of groupings and a size thereof.

In one embodiment the semiconductor device includes the synapse bonds that perform non-contact communication using magnetic coupling, and the neuron sections that include a wired connection and a logical circuit. The semiconductor device has a connection array where the synapse bonds and the neuron sections are spread three-dimensionally, and the semiconductor device has a function of reconfiguring at least some of groupings of the connection array or wired connections of short-distance, intermediate-distance, or long-distance connections.

### Effects of the Invention

According to the present invention, a "1H"-magnitude neuro-semiconductor device can be realized.

### BRIEF DESCRIPTION OF THE DRAWINGS

FIGS. 1A and 1B are diagrams for explaining a configuration of a neuro-semiconductor device according to an aspect of the present invention.
FIG. 2 is an internal transparent perspective view of a semiconductor chip constituting the neuro-semiconductor device of FIGS. 1A and 1B.
FIG. 3 is a schematic cross-sectional view for explaining non-contact communication in the neuro-semiconductor device of FIGS. 1A and 1B.
FIG. 4 is a diagram showing superiority of synapse imitation by magnetic coupling used for non-contact communication, in the neuro-semiconductor device shown in FIGS. 1A and 1B to FIG. 3 to which µTCI is applied.
FIGS. 5A and 5B are diagrams showing a trial calculation of power consumption of the neuro-semiconductor device shown in FIGS. 1A and 1B to FIG. 3 to which µTCI is applied.
FIG. 6 is a diagram for explaining benefits when magnetic coupling and semiconductor wafer thinning are combined for the neuro-semiconductor device shown in FIGS. 1A and 1B to FIG. 3 to which µTCI is applied.

### PREFERRED MODE FOR CARRYING OUT THE INVENTION

In description of the present specification, "performing a non-contact communication" means that one communication unit performing the communication and another communication unit performing the communication perform the communication without contacting each other and using a conductive member (at least one of solder, a conductive adhesive, and a wire). In addition, "performing a contact communication" means that one communication unit performing the communication and another communication unit performing the communication perform the communication while being in contact with each other or perform the communication using a conductive member (at least one of solder, a conductive adhesive, and a wire). In addition, the communication unit is a concept including a portion performing transmission and reception, a portion performing only the transmission, and a portion performing only the reception.

The magnitude of "1H" is indispensable for a neuro-semiconductor device imitating human intelligence. First of all, there is a demand that "1H" is realized with the "magnitude". That is, the magnitude of hardware imitating a brain structure/function that is working in Europe, the US, and Japan is extremely small. Even in the most advanced IBM (registered trademark) SyNAPSE (5.4 billion transistors), the one chip includes one million neutrons and 256 million synapse bonds, and 48 chip connections include 48 million neurons and 12.3 billion synapse bonds, and they still remain in the levels of a bee (insect) and a rat, respectively. However, to realize the magnitude of 1H, a huge number, 500000 chips are required. Here, for reference, in a supercomputer "K computer", the number of chips is 88128, which corresponds to only 864 tower racks. In other words, a large number of chips are required. Alternatively, it is possible to drive the chips at an operation speed of 500000 times (realistically at about 1 MHz) and complement the magnitude. However, even if a brain of a bee (insect) is operated 500000 times faster, the human intelligence cannot be produced. Therefore, first of all, the magnitude of 1H (100 billion neuron sections and 100 trillion synapse bonds) is indispensable.

However, to realize "1H" with hardware, completely different mounting technology of the tremendous magnitude is required. Here, in a three-dimensional stack method by a "post-processing" of semiconductor manufacturing by current mainstream TSV (Through Silicon Via) technology, the size is excessively large, the yield is low, and power consumption and heat generation reach unrealistic levels. For this reason, it is not realistic to adopt the three-dimensional stacking method by the "post-processing" of semiconductor manufacturing using current mainstream TSV (Through Silicon Via) technology. Therefore, the present inventors have jointly developed new three-dimensional mounting technology that can be almost completed only at a "pre-processing" stage in which processing is enabled with nanometer precision and have performed demonstration tests. Here, to realize this "new three-dimensional mounting technology", it is necessary to combine close proximity wireless communication technology, "magnetic coupling", semiconductor wafer thinning technology, wafer bonding technology not using an adhesive, and feeding technology not using TSV. The "new three-dimensional mounting technology" is referred to as "µTCI" (Micro ThruChip Interface) for the conventional TSV. By adopting µTCI, a three-dimensional stack thickness of about the 5 µm is enabled from a previous three-dimensional stack thickness of the 100 µm level and in a "pre-processing" of current semiconductor manufacturing, the magnetic coupling antenna area is reduced to 1/100 and the chip volume can be minimized to 1/1000 or less.

At this time, if a semiconductor pre-processing exclusively for three-dimensional stacking of µTCI is exclusively developed, the feasibility of wafer thinning to a thickness of 1 µm and obtaining a magnetic coupling antenna with a diameter of 2 µm also increases. As opposed to TSV, in µTCI, a logical circuit can be disposed in the magnetic coupling antenna with a diameter of 2 µm. In such a premise, it is possible to realize a function corresponding to neuron sections and synapse bonds of the 1H magnitude in a volume of only 800 cm³ by calculation. This premise is remarkably simple as compared with the development of most advanced semiconductor processes.

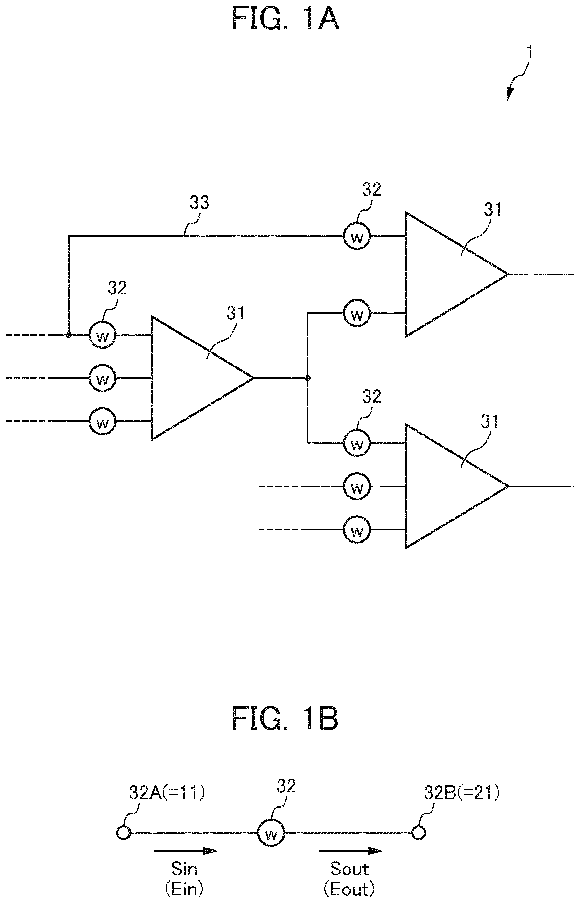

Here, an outline of a neuro-semiconductor device to which µTCI is applied will be described with reference to FIGS. 1A and 1B to FIG. 3.

FIGS. 1A and 1B are diagrams explaining a configuration of a neuro-semiconductor device 1. FIG. 1A is a diagram explaining a neuro-network in the neuro-semiconductor device 1. FIGS. 1B is a diagram explaining a synapse bond 32.

As shown in FIG. 1A, the neuro-network in the neuro-semiconductor device 1 includes neuron sections 31, synapse bonds 32, and nerve fiber wiring lines 33. Each of the neuron sections 31 is a portion that has an operation function imitating nerve cells. The synapse bond 32 is a portion that has a function of weighting an input signal and outputting a weighted signal. The nerve fiber wiring lines 33 are wiring lines corresponding to a function of nerve fibers. The neuron sections 31 are connected to each other by the nerve fiber wiring lines 33 via the synapse bonds 32.

A plurality of signals weighted by the synapse bonds 32 are input to the neuron section 31. The neuron section 31 performs a predetermined operation and outputs a signal when an operation result satisfies a predetermined condition. When the predetermined condition is satisfied, the neuron section 31 may be expressed as "ignited".

As illustrated in FIGS. 1(B), the synapse bond 32 has a synapse bond input terminal 32A and a synapse bond output terminal 32B. A synapse input signal Sin input to the synapse bond input terminal 32A is a signal with a synapse input-side potential Ein. In addition, a synapse output signal Sout output from the synapse bond output terminal 32B is a signal with a synapse output-side potential Eout. The synapse bond 32 outputs the synapse input signal Sin (synapse input-side potential Ein) multiplied by a predetermined weighting coefficient w as the synapse output signal Sout (synapse output-side potential Eout). That is, Eout = w × Ein is satisfied.

The weighting coefficient w of the synapse bond 32 is a variable that changes according to a situation. Therefore, the synapse bond 32 may be referred to as a portion that can change the synapse output-side potential Eout of the synapse output signal Sout output from the synapse bond 32 to the synapse input-side potential Ein of the synapse input signal Sin input to the synapse bond 32.

A change in the weighting coefficient w of the synapse bond 32 expresses a situation in which a specific nerve is activated in a human brain when the specific nerve is frequently used.

For example, the weighting coefficient w of the synapse bond 32 changes depending on the communication amount per unit time (the number of signals input to the synapse bond 32 per unit time). When the communication amount per unit time is small, the weighting coefficient w decreases and when the communication amount per unit time is large, the weighting coefficient w increases. For example, the weighting coefficient w of the synapse bond 32 decreases with time while communication is not performed (while no signal is input to the synapse bond 32). The temporal decrease of the weighting coefficient w of the synapse bond 32 can express forgetting of the synapse bond.

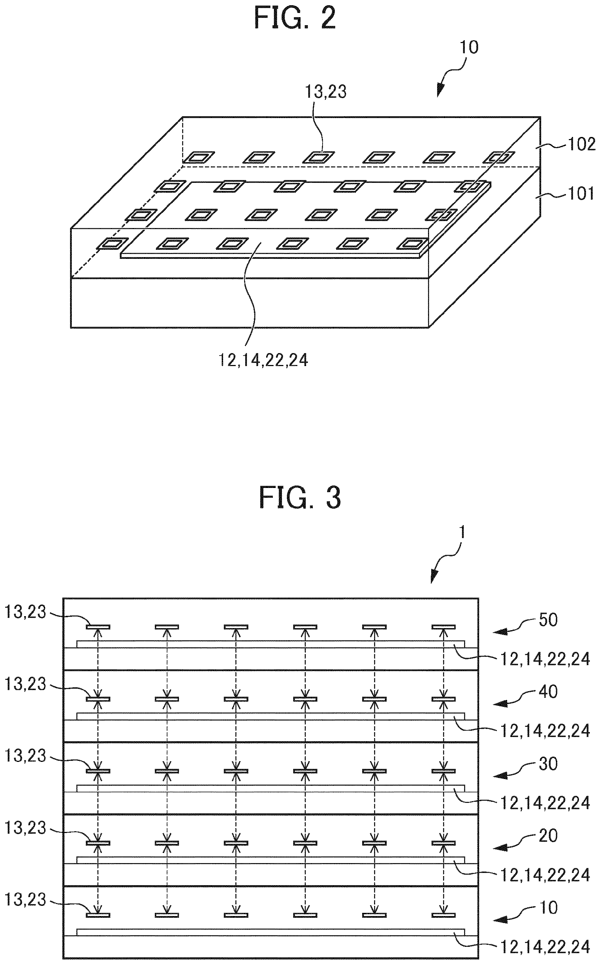

FIG. 2 is an internal transparent perspective view of a semiconductor chip 10 constituting the neuro-semiconductor device 1 of FIGS. 1A and 1B. As shown in FIG. 2, the first semiconductor chip 10 in the neuro-semiconductor device 1 includes a semiconductor substrate portion 101 and an insulating layer portion 102. The semiconductor substrate portion 101 is a substrate made of silicon. The insulating layer portion 102 is silicon oxide.

A transmission circuit unit 12, a reception circuit unit 22, a transmission signal processing unit 14, a reception signal processing unit 24, and the like are formed on the semiconductor substrate portion 101. The insulating layer portion 102 is stacked (disposed) on the semiconductor substrate portion 101 to cover the semiconductor substrate portion 101, the transmission circuit unit 12, and the reception circuit unit 22. A plurality of transmission coils 13 and a plurality of reception coils 23 are formed in the insulating layer portion 102. The transmission coils 13 are connected to the transmission circuit unit 12 by wiring lines (not illustrated in the drawings) formed in the insulating layer portion 102. The reception coils 23 are connected to the reception circuit unit 22 by the wiring lines (not illustrated in the drawings) formed in the insulating layer portion 102. The total thickness of the semiconductor substrate portion 101 and the insulating layer portion 102 is, for example, 2 µm to 25 µm.

A plurality of transmission-related configurations and a plurality of reception-related configurations are provided in an actual semiconductor chip 10.

Some or all transmission coils 13 are disposed to overlap the transmission circuit unit 12 and the reception circuit unit 22 in a vertical direction X. Some or all reception coils 23 are disposed to overlap the transmission circuit unit 12 and the reception circuit unit 22 in the vertical direction X. Therefore, the area of the region needed to arrange the transmission coils 13 and the reception coils 23 can be reduced. Second semiconductor chips 20 to 50 shown in FIG. 3 have the same structure as that of the semiconductor chip 10 shown in FIG. 2.

FIG. 3 is a schematic cross-sectional view explaining non-contact communication in the neuro-semiconductor device 1 of FIGS. 1A and 1B. As shown in FIG. 3, the neuro-semiconductor device 1 of FIGS. 1A and 1B is configured by three-dimensionally stacking five (a plurality of) semiconductor chips 10 to 50. That is, the neuro-semiconductor device 1 including the three-dimensional stacked structure of the semiconductor chips 10 to 50 shown in FIG. 3 is a neuro-semiconductor device to which µTCI is applied.

As shown by dotted arrows Y of FIG. 3, at least a part of the non-contact communication between the facing coils (the transmission coil 13 and the reception coil 23) is performed through the transmission circuit unit 12, the reception circuit unit 22, the transmission signal processing unit 14, the reception signal processing unit 24, and the like. Such communication is peculiar to non-contact communication by µTCI and cannot be realized by conventional TSV.

The plurality of semiconductor chips have been described as the five semiconductor chips 10 to 50. However, the present invention is not limited thereto. That is, the number of semiconductor chips (the number of stacked layers) at the time of three-dimensional stacking is not particularly limited to five and may be any number. Here, because the thickness of each semiconductor chip is about 2 µm to 25 µm, multiple semiconductor chips can be bonded. For example, the total thickness of a semiconductor device in which 128 semiconductor chips each having a thickness of 5 µm are bonded is about 640 µm.

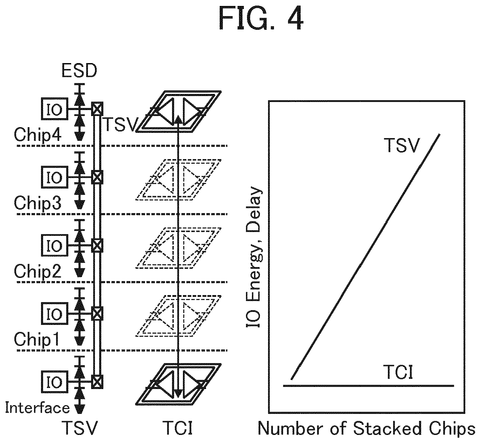

As such, in the neuro-semiconductor device 1 shown in FIGS. 1A and 1B to FIG. 3 to which µTCI is applied, the neuron section 31 is realized in the semiconductor substrate portion 101 and the like in each semiconductor chip and the synapse bond 32 is realized by non-contact communication using magnetic coupling. FIG. 4 is a diagram showing superiority of synapse imitation (synapse bond 32) by magnetic coupling. The magnetic coupling (non-contact communication) in µTCI is an optimal connection method for three-dimensional stacking, which is inevitable in tracking the magnitude. The magnetic coupling (non-contact communication) in µTCI does not use a wired connection or a TSV structure and has overwhelmingly low power consumption. By adopting the magnetic coupling (non-contact communication) in µTCI, it is possible to manufacture and dispose the coils with nm precision in semiconductor manufacturing pre-processing and it is possible to obtain an effect of reducing power by process evolution. When the magnetic coupling (non-contact communication) in µTCI is adopted, an overwhelming high-density three-dimensional mounting effect is obtained by semiconductor wafer thinning and fusion bonding. In addition, a feeding unit can be completed in the pre-processing by HDSW. To correspond to Switching and Broadcasting in multilayer coupling, one neuron section versus multi-synapse bonds can be imitated without lowering power efficiency. Because the magnetic coupling itself is analog processing, there is a possibility that a plurality of random variables can be implemented for weighting processing of the bond section using a plurality of structures and mechanisms.

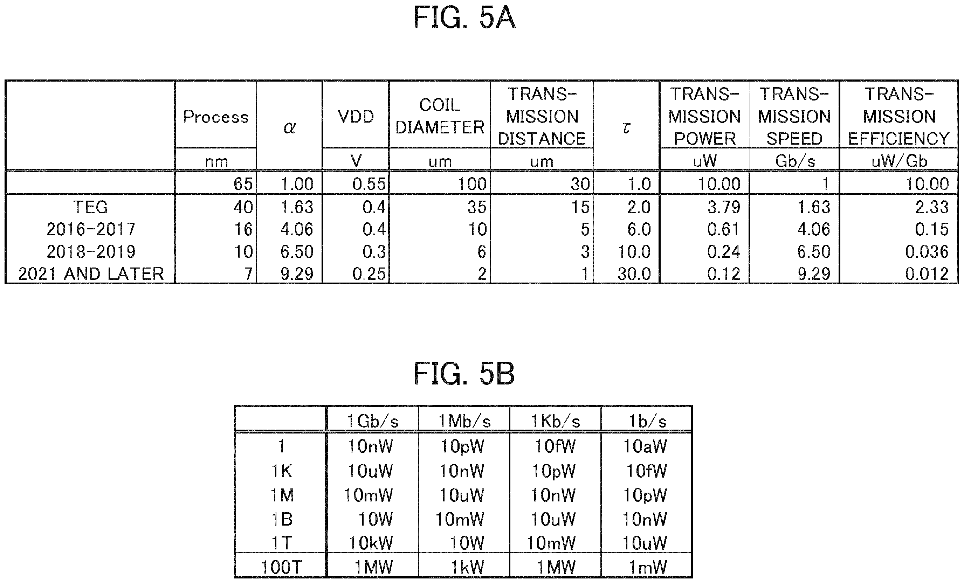

FIGS. 5A and 5B show a trial calculation of power consumption of the neuro-semiconductor device 1 shown in FIGS. 1A and 1B to FIG. 3 to which µTCI is applied. FIG. 5A shows improvement of transmission efficiency by the 3D scaling law of the magnetic coupling. FIG. 5B shows a trial calculation in which only simple junctions with neighboring synapses are assumed. If the ignition frequency and the transfer bit precision are considered, there is the possibility that about 1 Kb/s is appropriate. There is the possibility that 100 trillion whole neighboring synapse junctions are ignited at the same time and power falls within 1 W. It is assumed that one neuron is joined to 1000 synapses. If the maximum coil diameter is multiplied by 10, coils of different diameters are mixed, Phase Multiplex x is combined, there is the possibility that power falls within tenfold to hundredfold power (10 W to 100 W). In this case, the volume of 1H@1Hz increases to about 10 times 800 cm³ and becomes 8 L. Still, 10 GHz drive enables an operation of 10 billion people. Existing neuron chips consume power in the level of µW/Hz when the magnitude of neurons is hundreds of millions of neurons (TrueNorth uses 7 kW with 100 billion neurons).

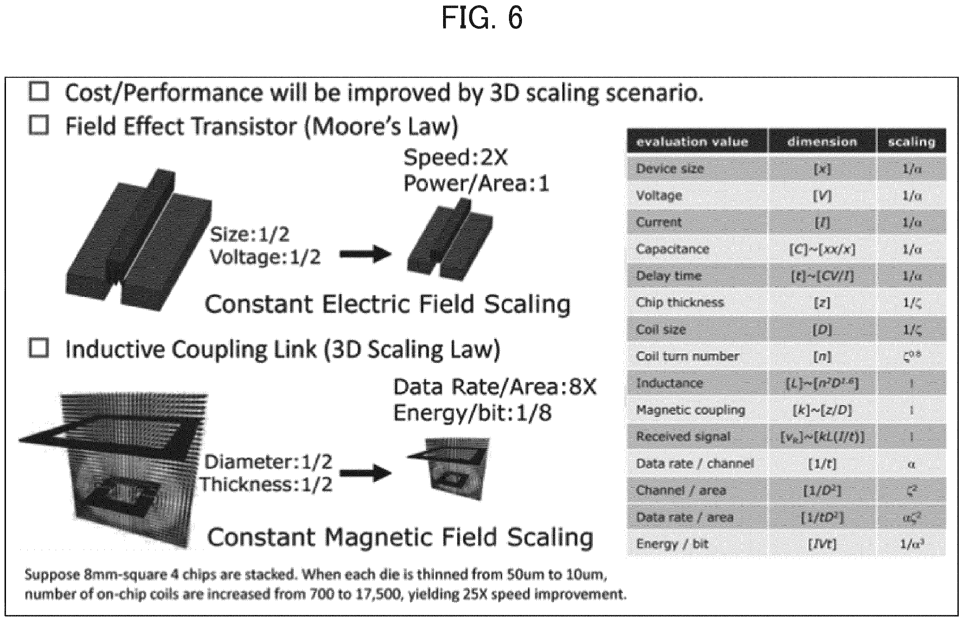

FIG. 6 is a diagram for explaining benefits when magnetic coupling and semiconductor wafer thinning are combined for the neuro-semiconductor device 1 shown in FIGS. 1A and 1B to FIG. 3 to which µTCI is applied. Specifically, it shows the content of materials published by professor Tadahiro Kuroda (Keio University), see for example the article entitled "Near-Field Coupling Integration Technology" published in EEE International Solid-State Circuits Conference (ISSCC'16), Dig. Tech. Papers, pp. 502-505, Feb. 2016. As shown in FIG. 6, the neuro-semiconductor device 1 shown in FIGS. 1A and 1B to FIG. 3 to which µTCI is applied can benefit from semiconductor scaling, which greatly exceeds Moore's Law by combining magnetic coupling and semiconductor wafer thinning.

Here, the neuro-semiconductor device 1 shown in FIGS. 1A and 1B to FIG. 3 to which µTCI is applied actually needs to have structures (neuron sections 31) including about 1000 nerve cells and about 100 trillion synapse bonds 32 to realize the magnitude of "1H". Therefore, hereinafter, it is assumed that the synapse bonds 32 are prepared at a ratio of 1000:1 for one neuron section 31 (one nerve cell). Here, as a configuration of a neural circuit of the actual brain, a huge number of types of circuit configuration are used, including intermediate/long-distance connections with various regions such as cerebellum, thalamus, and basal ganglia from cerebral neocortex. Therefore, the neuro-semiconductor device 1 according to this embodiment has a programmable function for designating and configuring grouping and short/intermediate/long-distance connections for reproducing these or creating a new configuration for each function. This function is based on the idea of an array of sea of connections, whereas FPGA is an array of sea of gates and implements a mechanism for configuring a connection pattern, similar to a mechanism for synthesizing a logical circuit of FPGA, for the other. Hereafter, what can realize the above function is referred to as "NSPCA".

NSPCA can be referred to as FPGA of a nerve synapse bond version. FPGA is an abbreviation for a Field Programmable Gate Array and refers to an array where multiple rewritable logical operation elements on the spot are spread. NSPCA is an abbreviation for a Neuro-Synaptic Programmable Connection 3D Array and has the following first and second features. The first feature is to have a connection array where structures corresponding to the neuron sections 31 (Neuron: 100 billion wired connections and logical circuits) and the synapse bonds 32 (Synapse: non-contact communication using 100 trillion magnetic coupling) of the magnitude of 1H are spread three-dimensionally. The second feature is to reconfigure grouping of the connection array of the constant magnitude or wired connections of short/intermediate/long-distance connections.

That is, the neuro-semiconductor device 1 to which NSPCA is applied is a semiconductor device that constitutes a neural network to which a plurality of sets including a plurality of synapse bonds for each neuron section therein are connected. The neuro-semiconductor device 1 includes the synapse bonds that perform non-contact communication using magnetic coupling; and the neuron sections that include a wired connection and a logical circuit, the neuro-semiconductor device 1 has a connection array where the synapse bonds and the neuron sections are spread three-dimensionally, and the neuro-semiconductor device 1 has a function of reconfiguring at least some of groupings of the connection array or wired connections of short-distance, intermediate-distance, or long-distance connections.

The neuro-semiconductor device 1 having the first feature and the second feature, that is, the neuro-semiconductor device 1 using the reconfigurable 1H-magnitude connection array structure can construct each function group (neocortex, thalamus, basal ganglia, association cortex, and the like) of the actual brain structure and complicated connections thereof. Because NSPCA includes a memory, a reconfiguration function, and the like, the neuro-semiconductor device 1 has a large size (however, it is much smaller than a supercomputer) and has a low speed (however, the speed is several million times the speed of the brain).

NSPCA is applied so that it is expected that "1H" increases to "7300000000H" in a short time in the future. That is, if 1H-magnitude hardware can be configured by magnetic coupling with the semiconductor, various experiments, analyses, and designs can be easily performed at a high speed (several MHz to several tens of MHz) using NSPCA to be the nerve synapse bond version of FPGA. After the design is completed with NSPCA as described above, it can be shifted to NSPU (Neuro-Synaptic Processing Unit), which can operate at a higher speed (several GHz). That is, it is possible to establish a relation between NSPU and NSPCA, similar to a relation between general ASIC and FPGA. At this time, the magnitude automatically becomes "1000000000H" from "1H". However, in actuality, it is necessary to solve a problem of power consumption and heat generation with a next-generation supercomputer or the like. Therefore, the size of each side of a cube of 1-H magnitude NSPU is increased two times, so that "8000000000H = 8BH" of eight times is completed, and intelligence corresponding to 8 billion people is created. In addition, the magnitude may reach 8BH (8 billion H) in a short time by self-evolution of intelligence of 1H. That is, the magnitude may reach a singular point from a previous singular point at a speed which can be said to be instantaneous.

### EXPLANATION OF REFERENCE NUMERALS

- 1: neuro-semiconductor device
- 10: semiconductor chip
- 12: transmission circuit unit
- 13: transmission coil (transmission unit)
- 14: transmission signal processing unit
- 20: semiconductor chip
- 30: semiconductor chip
- 31: neuron section
- 32: synapse bond
- 33: nerve fiber wiring line
- 40: semiconductor chip
- 50: semiconductor chip

## Claims

1. A semiconductor device (1) that constitutes a neural network in which a plurality of sets, each including a plurality of synapse bonds (32) and a neuron section (31), are connected with each other, the semiconductor device comprising:
a semiconductor substrate portion (101), and
an insulating layer portion (102) stacked on the semiconductor substrate portion (101),
the synapse bonds (32) configured to perform non-contact communication using magnetic coupling, wherein the synapse bonds (32) have a reception circuit unit (22) formed at the semiconductor substrate portion (101) and reception coils (23) formed at the insulating layer portion (102), wherein the reception circuit unit (22) and the reception coils (23) are connected by wiring lines formed in the insulating layer portion (102); and
the neuron sections (31) that include a wired connection and a logical circuit, wherein the neuron sections (31) have a transmission circuit unit (12) formed at the semiconductor substrate portion (101) and transmission coils (13) formed at the insulating layer portion (102), wherein the transmission circuit unit (12) and the transmission coils (13) are connected by wiring lines formed in the insulating layer portion (102),
wherein the semiconductor device has a connection array where the synapse bonds (32) and the neuron sections (31) are spread three-dimensionally, wherein some or all reception coils (23) and some or all transmission coils (13) are disposed to overlap the transmission circuit unit (12) and the reception circuit unit (22) in a vertical direction (X), and
wherein grouping of the connection array is performed and the semiconductor device has a function of reconfiguring a configuration including the number of groupings and a size thereof.

2. A semiconductor device (1) according to claim 1, wherein the semiconductor device (1) has wired connections of short-distance, intermediate-distance, or long-distance connections between a plurality of connection arrays.

3. A semiconductor device (1) according to claim 2, wherein the semiconductor device has a function of reconfiguring at least some of the wired connections of short-distance, intermediate-distance, or long-distance connections between a plurality of connection arrays.

## Patentansprüche

1. Ein Halbleiterbauelement (1), das ein neuronales Netzwerk bildet, in dem eine Vielzahl von Sätzen, die jeweils eine Vielzahl von Synapsenbindungen (32) und einen Neuronenabschnitt (31) enthalten, mit einander verbunden sind, wobei das Halbleiterbauelement Folgendes umfasst:
einen Halbleitersubstratabschnitt (101), und
einen Isolierschichtabschnitt (102), der auf den Halbleitersubstratabschnitt (101) gestapelt ist, wobei
die Synapsenbindungen (32) so konfiguriert sind, dass sie eine berührungslose Kommunikation unter Verwendung magnetischer Kopplung ausführen, wobei die Synapsenbindungen (32) eine Empfangsschaltungseinheit (22) haben, die auf dem Halbleitersubstratabschnitt (101) gebildet ist und Empfangsspulen (23), die an dem Isolierschichtabschnitt (102) ausgebildet sind, wobei die Empfangsschaltungseinheit (22) und die Empfangsspulen (23) durch Verdrahtungsleitungen verbunden sind, die in dem Isolierschichtabschnitt (102) gebildet sind; und
die Neuronenabschnitte (31), die eine verdrahtete Verbindung und eine logische Schaltung enthalten, wobei die Neuronenabschnitte (31) eine Übertragungsschaltungseinheit (12) haben, die an dem Halbleitersubstratabschnitt (101) ausgebildet ist, und Übertragungsspulen (13), die an dem Isolierschichtabschnitt (102) ausgebildet sind, wobei die Übertragungsschaltungseinheit (12) und die Übertragungsspulen (13) durch Verdrahtungsleitungen verbunden sind, die in dem Isolierschichtabschnitt (102) gebildet sind,
wobei die Halbleitervorrichtung eine Verbindungsanordnung aufweist, bei der die Synapsenbindungen (32) und die Neuronenabschnitte (31) dreidimensional verteilt sind, wobei einige oder alle Empfangsspulen (23) und einige oder alle Übertragungsspulen (13) so angeordnet sind, dass sie die Übertragungsschaltungseinheit (12) und die Empfangsschaltungseinheit (22) in einer vertikalen Richtung (X) überlappen, und
wobei eine Gruppierung der Verbindungsanordnung durchgeführt wird und die Halbleitervorrichtung eine Funktion hat der Rekonfiguration einer Konfiguration einschließlich der Anzahl von Gruppierungen und deren Größe hat.

2. Halbleitervorrichtung (1) nach Anspruch 1, wobei die Halbleitervorrichtung (1) drahtgebundene Verbindungen von Kurzstrecken-, Mittelstrecken- oder Langstreckenverbindungen zwischen einer Vielzahl von Verbindungsanordnungen aufweist.

3. Halbleitervorrichtung (1) nach Anspruch 2, wobei die Halbleitervorrichtung eine Funktion der Rekonfiguration von zumindest einigen der kabelgebundenen Verbindungen der Kurzstrecken-, Mittelstrecken- oder Langstreckenverbindungen zwischen einer Vielzahl von Verbindungsanordnungen hat.

## Revendications

1. Dispositif à semi-conducteurs (1) qui constitue un réseau neuronal dans lequel une pluralité d'ensembles, comportant chacun une pluralité de liaisons synaptiques (32) et une section de neurone (31), sont connectés entre eux, le dispositif à semi-conducteurs comprenant :
une partie de substrat à semi-conducteurs (101), et
une partie de couche isolante (102) empilée sur la partie de substrat à semi-conducteurs (101),
les liaisons synaptiques (32) configurées pour réaliser une communication sans contact en utilisant un couplage magnétique, dans lequel les liaisons synaptiques (32) présentent une unité de circuit de réception (22) formée au niveau de la partie de substrat à semi-conducteurs (101) et des bobines de réception (23) formées au niveau de la partie de couche isolante (102), dans lequel l'unité de circuit de réception (22) et les bobines de réception (23) sont connectées par des lignes de câblage formées dans la partie de couche isolante (102) ; et
les sections de neurone (31) qui comportent une connexion câblée et un circuit logique, dans lequel les sections de neurone (31) présentent une unité de circuit de transmission (12) formée au niveau de la partie de substrat à semi-conducteurs (101) et des bobines de transmission (13) formées au niveau de la partie de couche isolante (102), dans lequel l'unité de circuit de transmission (12) et les bobines de transmission (13) sont connectées par des lignes de câblage formées dans la partie de couche isolante (102),
dans lequel le dispositif à semi-conducteurs présente un réseau de connexion où les liaisons synaptiques (32) et les sections de neurone (31) sont réparties en trois dimensions, dans lequel certaines ou la totalité des bobines de réception (23) et certaines ou la totalité des bobines de transmission (13) sont disposées pour se chevaucher avec l'unité de circuit de transmission (12) et l'unité de circuit de réception (22) dans une direction verticale (X), et
dans lequel un groupement du réseau de connexion est réalisé et le dispositif à semi-conducteurs présente une fonction de reconfiguration d'une configuration comportant le nombre de groupements et une taille de ceux-ci.

2. Dispositif à semi-conducteurs (1) selon la revendication 1, dans lequel le dispositif à semi-conducteurs (1) présente des connexions câblées de connexions de courte distance, de moyenne distance, ou de longue distance entre une pluralité de réseaux de connexion.

3. Dispositif à semi-conducteurs (1) selon la revendication 2, dans lequel le dispositif à semi-conducteurs présente une fonction de reconfiguration d'au moins certaines des connexions câblées de connexions de courte distance, de moyenne distance, ou de longue distance entre une pluralité de réseaux de connexion.
